# EUROPÄISCHE PATENTSCHRIFT

(11) **EP 2 243 663 B1**
(45) Veröffentlichungstag und Bekanntmachung des Hinweises auf die Patenterteilung: **01.02.2012**
(21) Anmeldenummer: 10003840.5
(22) Anmeldetag: 10.04.2010
(51) Int. Cl.: B60Q 3/02, B60J 7/12

(54) **Beleuchtung für einen Fahrgastraum eines Personenkraftwagens**
Lighting for a passenger area of a passenger vehicle
Eclairage pour un espace passager d'un véhicule de transport de personnes

(30) Priorität: 21.04.2009 DE 102009018296
(43) Veröffentlichungstag der Anmeldung: 27.10.2010
(73) Patentinhaber: Magna Car Top Systems GmbH, 74321 Bietigheim-Bissingen (DE)
(72) Erfinder: Kammerer, Dieter, Dipl.-Ing., 74343 Sachsenheim (DE); Rakus, Bernd, 70499 Stuttgart (DE)
(74) Vertreter: Völger, Silke Beatrix

(56) Entgegenhaltungen:
- DE-A1- 10 113 100
- DE-A1-102007 042 851
- DE-A1-102007 042 852
- DE-A1-102007 061 602

## Beschreibung

Die Erfindung bezieht sich auf eine Beleuchtung für einen Fahrgastraum eines Personenkraftwagens mit einem Faltverdeck, nach dem Oberbegriff des Patentanspruchs 1.

Es ist ein Faltverdeck für ein Kraftfahrzeug mit einer flexiblen Verdeckhaut, DE 101 13 100 A1, bekannt, die bei geschlossenem Faltverdeck von einem Spriegel aufgespannt gehalten wird. Der quer zur Fahrzeuglängsrichtung verlaufende Spriegel besteht aus einem biegesteifen Träger, der als Hohlprofil ausgebildet ist. In einer einem Fahrgastraum zugekehrten Wand des Trägers ist eine Öffnung vorgesehen, durch die eine Lampe mit einer Streuscheibe sowie ein eine Glühlampe tragender Reflektor eingesetzt ist. Die Streuscheibe deckt einen Rand einer Öffnung in einer Innenhaut ab, die mit kreisförmigen Verdickungen, in korrespondierenden Aufnahmen des Hohlkörpers befestigt ist.

Aus der DE 20 2006 014 523 U1 geht eine Beleuchtungseinrichtung für ein faltbares Fahrzeugdach hervor. Hierbei ist für jeden Sitz des Fahrzeugs ein in das Fahrzeugdach integriertes Beleuchtungsmittel vorgesehen. Das Beleuchtungsmittel ist außerhalb von Knickzonen des Fahrzeugdachs angeordnet und umfasst eine herkömmliche Glühlampe als Leuchtmittel.

In der DE 103 45 002 A1 wird ein Beleuchtungssystem für einen Innenraum von Fahrzeugen, insbesondere Cabrios, behandelt, bei denen das Dach im Fahrzeuginnenraum vorzugsweise mit einer textilen Auskleidung versehen ist. Auf der dem Fahrzeuginnenraum zugekehrten Seite der Auskleidung sind Lichtleiter oder andere elektrische Leuchtmittel verästelt angebracht.

Aufgabe der Erfindung ist es, eine Beleuchtung für einen Fahrgastraum eines Personenkraftwagens zu schaffen, welche Beleuchtung mit einfachen, jedoch funktionsgerechten technischen Mitteln einem Faltdach mit einem Verdeckbezug, Spriegeln und einer Innenverkleidung zugeordnet ist.

Die mit der Erfindung hauptsächlich erzielten Vorteile sind darin zu sehen, dass Anordnung und Aufhängung des Leuchtenkörpers der Beleuchtung vorbildlich mit der Spanngurtvorrichtung konstruktiv umsetzbar sind. Die zwischen den Spriegeln eines Verdeckgestänges wirkende Spanngurtvorrichtung unterstützt nicht nur die freie Gestaltung der Unterbringung der Beleuchtung, sondern trägt auch dazu bei, dass sich der Leuchtenkörper beim Öffnen und Schließen des Faltverdecks gezielt in eine Ablagestellung bzw. eine Betriebsstellung verbringen lässt. Die Spanngurtvorrichtung setzt mit ihren beiden Spanngurten und deren Zusammenwirken mit einer Halteeinrichtung an einer Rückseite des Gehäuses des Leuchtenkörpers Maßstäbe. Die Halteeinrichtung ist nach Art einer Klemmvorrichtung für jeden Spanngurt ausgeführt, die zum einen eine sichere Befestigung des jeweiligen Spanngurts am Gehäuse des Leuchtenkörpers ergibt und zum anderen eine Einstellbarkeit des Gehäuses bzw. Leuchtenkörpers in Längsrichtung der Spanngurte ermöglicht. Die Schlitze der Klemmvorrichtung für die Spanngurte sind musterhaft in das Gehäuse des Leuchtenkörpers integriert. Schließlich sind die freien Enden der Spanngurte unter Vermittlung von Umlenkelementen auf einfache aber wirksame Weise mit den Spriegeln des Verdeckgestänges verbunden.

In der Zeichnung wird ein Ausführungsbeispiel der Erfindung gezeigt, das nachstehend näher beschrieben ist.

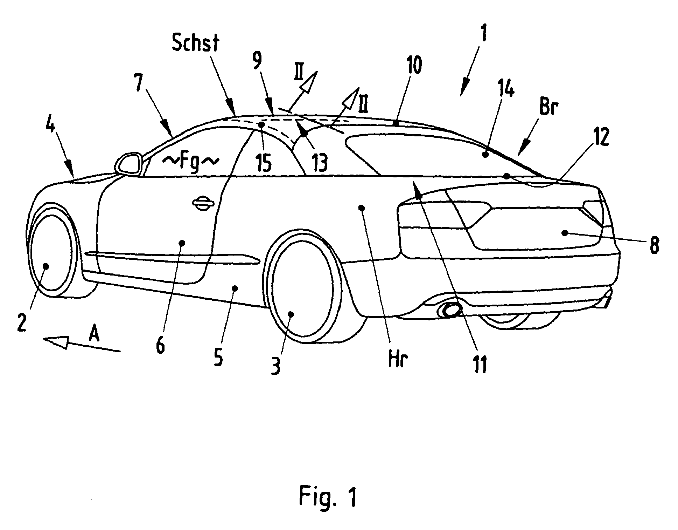

Es zeigen
Fig. 1 eine Schrägansicht von hinten links auf einen Personenkraftwagen mit einem Faltverdeck,
Fig. 2 einen Schnitt nach der etwa entlang einer Mittellängsebene verlaufenden Linie II-II der Fig. 1 in größerem Maßstab,
Fig. 3 eine Einzelheit X der Fig. 2 in größerem Maßstab,
Fig. 4 eine Schrägansicht von oben auf einen Leuchtenkörper und eine Spanngurtvorrichtung des Faltverdecks nach Fig. 1.

Ein Personenkraftwagen 1 weist einen von Rädern 2 und 3 getragenen Aufbau 4 auf, der einen Grundkörper 5 mit Türen 6, einem Windschutzscheibenrahmen 7 und eine Heckklappe 8 besitzt. Am Aufbau 4 bzw. Grundkörper 5 ist ein Faltdach 9 gelagert, das zwischen einer einen Fahrgastraum Fg überspannenden Schließstellung Schst und einer in einem Heckraum Hr ablegbaren Offenstellung -nicht gezeigt- bewegbar ist. Das Faltdach 9 umfasst einen flexiblen Verdeckbezug 10, der sich in der Schließstellung Schst vom Windschutzscheibenrahmen 7 bis zu einem hinteren Abschnitt 11 1 einer Gürtellinie 12 erstreckt. In den Verdeckbezug 10, der bereichsweise auf einer dem Fahrgastraum Fg zugewandten Seite mit einer Innenverkleidung 13 versehen ist, ist in einem rückwärtigen Bereich Br eine Heckscheibe 14 integriert. Die Heckscheibe 14 besteht bspw. aus Glas und verläuft entgegen Fahrtrichtung A betrachtet schräg von oben nach unten.

Ein Verdeckgestänge 15 umfasst Spriegel 16 und 17, die quer zur Fahrzeuglängsrichtung B-B verlaufen, und zwar mit Abstand zu letzterer. Die Spriegel 16 und 17 tragen einerseits den Verdeckbezug 10 und andererseits die Innenverkleidung 13, die unter Bildung eines Zwischenraums Zr zueinander verlaufen, wobei die Innenverkleidung 13 den Fahrgastraum Fg nach oben hin begrenzt.

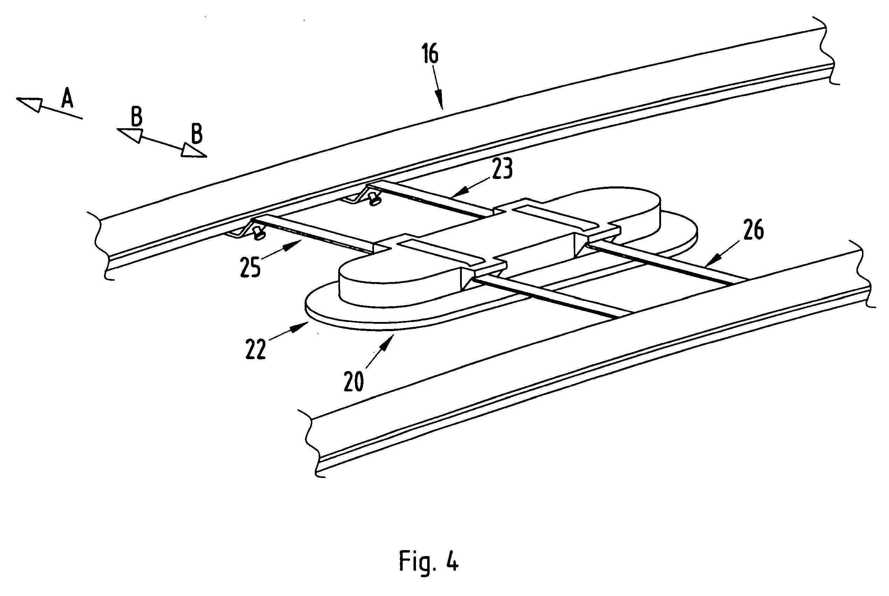

Das Faltdach 9 ist mit einer Beleuchtung 18 versehen, mit der der Fahrgastraum Fg zumindest bereichsweise ausleuchtbar ist. Die Beleuchtung 18 ist mit einem ein oder mehrere Glühmittel 19 besitzenden Leuchtenkörper 20 versehen, an dem eine von der Innenverkleidung 13 abscheinende Streuscheibe 21 gehalten ist. Der Leuchtenkörper 20 weist ein im Querschnitt ungefähr trogförmiges Gehäuse 22 auf, das quer zur Fahrzeuglängsrichtung B-B länger ist als in besagter Fahrzeuglängsrichtung. Dabei wird der Leuchtenkörper 20 zwischen den Spriegeln 16 und 17 mittels einer Spannvorrichtung 23 getragen. Die Spannvorrichtung 23 ist zwischen den Spriegeln 16 und 17, sowie dem Leuchtenkörper 20 wirksam und umfasst zwei mit Abstand zueinander angeordnete Spanngurte 25 und 26 -Fig. 4-, welche Spanngurte 25 und 26 z.B. aus Polyester-Bandmaterial gefertigt sind, wobei sie zur Dehnungsverringerung vorgereckt sein können. Jeder Spanngurt, bspw. 25, arbeitet mit einer Außenseite 27 eines Bodens 28 des Gehäuses 22 und einer Haltevorrichtung 29 von letzterem zusammen. Die Haltevorrichtung 29 ist nach Art einer Klemmvorrichtung 30 für den Spanngurt 25 ausgeführt, welche Klemmvorrichtung 29 einen Gurtabschnitt 31 dieses Spanngurts 25 festlegt. Als Stand der Technik zu der Klemmvorrichtung wird auf den Klemmschieber nach der DE 29 34 101 C2 verwiesen.

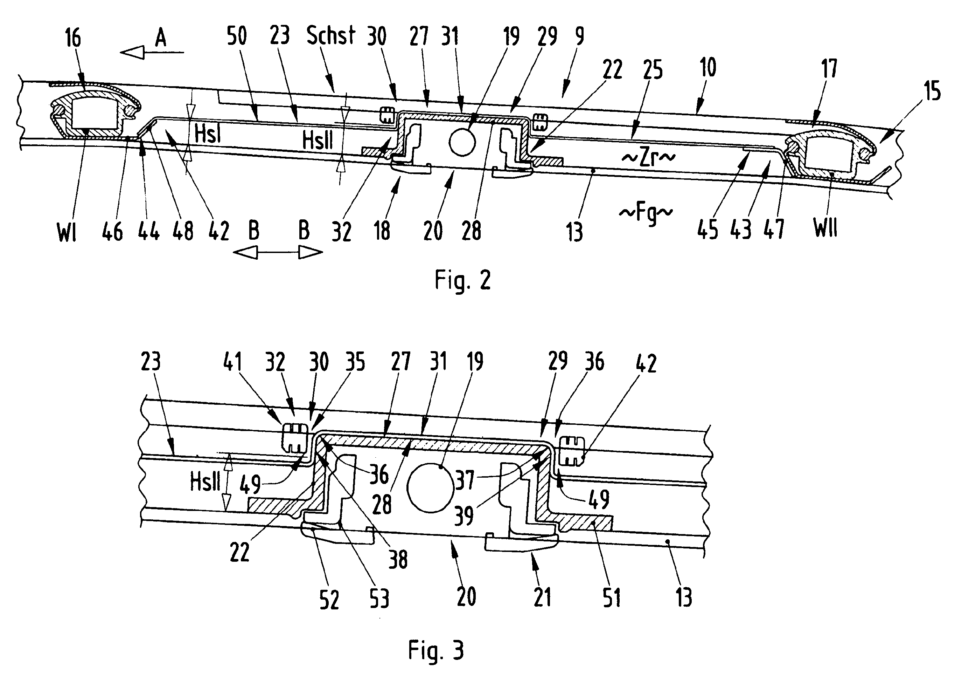

Die Klemmvorrichtung 30 -Fig. 3- ist an in Fahrzeuglängsrichtung B-B betrachteten Enden 32 und 33 mit Schlitzen 34 und 35 versehen, durch die der am Boden 28 des Gehäuses 22 anliegende Gurtabschnitt 31 hindurchgeführt und entlang von Rundungen 36 und 37 des trogförmigen Gehäuses 22 umgelenkt wird. Die Schlitze 34 und 35 werden durch Abschnitte 38 und 39 und Bügel 40 und 41 des Gehäuses 22 gebildet. Die Bügel 40 und 41 sind aus einem Stück mit dem z.B. aus Kunststoff hergestellten Gehäuse 22 gefertigt.

Freie Endbereiche 42 und 43 des Gurtes 25 sind unter Vermittlung formsteifer Umlenkelemente 44 und 45 an unteren Wänden WI und WII der Spriegel 16 und 17 befestigt. Die Umlenkelemente 44 und 45 werden durch Winkelstücke 46 und 47 gebildet. Jedes Winkelstück, z.B. 46, ist mit einer Abwinkelung 48 versehen, deren von der Innenverkleidung 13 aus gemessene senkrechte Höhe Hsl in etwa der ebenfalls von der Innenverkleidung 13 gemessene Höhe HsII eines Umlenkorgans 49 des gegenüberliegenden Bügels 40 des Gehäuses 22 entspricht. Diese Auslegung der Abwinkelung 48 und des Umlenkorgans 49 stellt sicher, dass das zwischen Abwinkelung 48 und Umlenkorgan 49 verlaufende Gurtstück 50 des Gurtabschnitts 31 in der Schließstellung Schst des Faltdachs 9 ungefähr parallel zur Innenverkleidung 13 sich erstreckt und der Gurtabschnitt 31 in den Schlitzen 34 und 35 gezielt an den Rundungen 36 und 37 und am Boden 28 des Gehäuses 22 anliegt, wodurch die Klemmvorrichtung 30 wirksam wird. Durch entsprechende Lockerung der Endbereiche 42 und 43 kann die Klemmfunktion der Klemmvorrichtung 30 aufgehoben werden und der Leuchtenkörper 20 in Fahrzeuglängsrichtung B-B verstellt werden.

Das Gehäuse 22 ist auf der der Innenverkleidung 13 zugekehrten Seite mit einem Randflansch 51 versehen, auf dem die Innenverkleidung 13 aufliegt. Dabei wird ein Rand 52 einer Durchgangsöffnung 53 der Innenverkleidung 13 für den Leuchtenkörper 20 von letzterem abgedeckt.

## Patentansprüche

1. Beleuchtung für einen Fahrgastraum eines Personenkraftwagens mit einem Faltverdeck, das zwischen einer den Fahrgastraum überspannenden Schließstellung in eine in einem Heckraum eines Aufbaus des Personenkraftwagens abgelegten Offenstellung bewegbar ist und einen von quer zur Fahrzeuglängsrichtung verlaufenden Spriegeln eines Verdeckgestänges getragenen Verdeckbezug sowie eine zum Fahrgastraum hin gerichtete Innenverkleidung aufweist, wobei die Beleuchtung einen Leuchtenkörper mit einer von der Innenverkleidung aus abscheinenden Streuscheibe besitzt, **dadurch gekennzeichnet, dass** der Leuchtenkörper (20) zwischen benachbarten Spriegeln (16 und 17) angeordnet und mittels einer Spanngurtvorrichtung (23) aufgehängt ist, die einerseits an den Spriegeln (16 und 17) gehalten ist und andererseits ein Gehäuse (22) des Leuchtenkörpers (20) trägt.

2. Beleuchtung nach Anspruch 1, **dadurch gekennzeichnet, dass** die Spanngurtvorrichtung (23) -in Fahrzeuglängsrichtung B-B betrachtet- bspw. zwei mit parallelem Abstand ausgerichtete Spanngurte (25 und 26) aufweist, die mit einer Haltevorrichtung (29) des Gehäuses (22) zusammenwirken.

3. Beleuchtung nach Anspruch 2, **dadurch gekennzeichnet, dass** jede Haltevorrichtung (29) des Gehäuses (22) nach Art einer Klemmvorrichtung (30) für die Spanngurtvorrichtung (23) ausgeführt ist, die einen Gurtabschnitt (31) eines Spangurtes (z.B. 25) am Gehäuse (22) des Leuchtenkörpers (20) festlegt.

4. Beleuchtung nach Anspruch 3, **dadurch gekennzeichnet, dass** die Klemmvorrichtung (30) an gegenüberliegenden Enden (32 und 33) des Gehäuses (22) Schlitze (34 und 35) umfasst, durch die der an einem Boden (28) des Gehäuses (22) anliegende Gurtabschnitt (31) hindurchgeführt ist.

5. Beleuchtung nach Anspruch 4, **dadurch gekennzeichnet, dass** die Schlitze (34 und 35) durch Abschnitte (38 und 39) das Gehäuse (22) und an besagtes Gehäuse (222) angegliederte Bügel (40 und 41) gebildet wird.

6. Beleuchtung nach Anspruch 5, **dadurch gekennzeichnet, dass** die Bügel (40 und 41) aus einem Stück mit dem Gehäuse (22) hergestellt sind.

7. Beleuchtung nach Anspruch 1, **dadurch gekennzeichnet, dass** frei Endbereiche (42 und 43) des Spangurtes (25) unter Vermittlung formsteifer Umlenkelemente (44 und 45) an die Spriegel (16 und 17) angeschlossen sind.

8. Beleuchtung nach Anspruch 7, **dadurch gekennzeichnet, dass** die Umlenkelemente (44 und 45) durch Winkelstücke (46 und 47) gebildet werden, die an den Spriegeln (16 und 17) in Lage gehalten werden.

9. Beleuchtung nach den Ansprüchen 1 und 2, **dadurch gekennzeichnet, dass** das Gehäuse (22) auf der der Innenverkleidung (13) zugekehrten Seite mit einem Randflansch (51) versehen ist, auf dem die Innenverkleidung (13) aufliegt.

10. Beleuchtung nach Anspruch 1, **dadurch gekennzeichnet, dass** ein Rand (52) einer Durchgangsöffnung (53) der Innenverkleidung (13) für den Leuchtenkörper (20) von besagtem Leuchtenkörper (20) abgedeckt wird.

## Claims

1. Lighting unit for a passenger compartment of a passenger vehicle having a folding top which can be moved between a closed position, in which it spans the passenger compartment, and an open position, in which it is deposited in a rear compartment in a motor vehicle body, and has a top cloth which is supported by top linkage bows running transversely with respect to the longitudinal direction of the vehicle, and has an interior lining directed towards the passenger compartment, wherein the lighting unit has a lighting unit body with a diffusion lens reflecting from the interior lining, **characterized in that** the lighting unit body (20) is arranged between adjacent bows (16 and 17) and is suspended by means of a tensioning strap device (23) which, firstly, is held on the bows (16 and 17) and, secondly, carries a housing (22) of the lighting unit body (20).

2. Lighting unit according to Claim 1, **characterized in that** the tensioning strap device (23) - as viewed in the longitudinal direction B-B of the vehicle - has, for example, two tensioning straps (25 and 26) which are oriented with a parallel spacing and interact with a holding device (29) of the housing (22).

3. Lighting unit according to Claim 2, **characterized in that** each holding device (29) of the housing (22) is designed in the manner of a clamping device (30) for the tensioning strap device (23), said clamping device securing a strap section (31) of a tensioning strap (for example 25) to the housing (22) of the lighting unit body (20).

4. Lighting unit according to Claim 3, **characterized in that**, at opposite ends (32 and 33) of the housing (22), the clamping device (30) comprises slots (34 and 35) through which the strap section (31) bearing against a base (28) of the housing (22) is guided.

5. Lighting unit according to Claim 4, **characterized in that** the slots (34 and 35) are formed by sections (38 and 39) of the housing (22) and by clips (40 and 41) joined to said housing (22).

6. Lighting unit according to Claim 5, **characterized in that** the clips (40 and 41) are produced integrally with the housing (22).

7. Lighting unit according to Claim 1, **characterized in that** free end regions (42 and 43) of the tensioning strap (25) are connected to the bows (16 and 17) with the aid of dimensionally rigid deflecting elements (44 and 45).

8. Lighting unit according to Claim 7, **characterized in that** the deflecting elements (44 and 45) are formed by angle sections (46 and 47) which are kept in position on the bows (16 and 17).

9. Lighting unit according to Claims 1 and 2, **characterized in that that** side of the housing (22) which faces the interior lining (13) is provided with an edge flange (51) on which the interior lining (13) rests.

10. Lighting unit according to Claim 1, **characterized in that** an edge (52) of a passage opening (53) in the interior lining (13) for the lighting unit body (20) is covered by said lighting unit body (20).

## Revendications

1. Éclairage pour habitacle de véhicule de tourisme équipé d'une capote pliable pouvant être déplacée entre une position fermée recouvrant l'habitacle et une position ouverte dans laquelle elle est rangée dans un espace arrière d'une structure saillante du véhicule de tourisme ainsi que d'une toile de capote supportée par des éclisses de baguette de capote s'étendant transversalement à la direction longitudinale du véhicule et d'un revêtement intérieur orienté vers l'habitacle, l'éclairage possédant un corps de feu équipé d'un élément de dispersion éclairant vers l'extérieur depuis le revêtement intérieur, **caractérisé en ce que** le corps de feu (20) est disposé entre des éclisses (16 et 17) voisines et suspendu à l'aide d'un dispositif de sangle de serrage (23) maintenu d'une part contre les éclisses (16 et 17) et supportant d'autre part le boîtier (22) du corps de feu (20).

2. Éclairage selon la revendication 1, **caractérisé en ce que** le dispositif de sangle de serrage (23), vu dans la direction longitudinale du véhicule B-B, comporte par exemple deux sangles de serrage (25 et 26) parallèles positionnées à une certaine distance l'une de l'autre et entrant en interaction avec un dispositif de retenue (29) du boîtier (22).

3. Éclairage selon la revendication 2, **caractérisé en ce que** chaque dispositif de retenue (29) du boîtier (22) est réalisé à la façon d'un dispositif de blocage (30) pour le dispositif de sangle de serrage (23) qui maintient fixement une section de sangle (31) d'une sangle de serrage (par exemple 25) au boîtier (22) du corps de feu (20).

4. Éclairage selon la revendication 3, **caractérisé en ce que** le dispositif de blocage (30) comprend, au niveau des extrémités opposées (32 et 33) du boîtier (22), des fentes (34 et 35) à travers lesquelles la section de sangle (31) reposant contre un fond (28) du boîtier (22) est introduite.

5. Éclairage selon la revendication 4, **caractérisé en ce que** les fentes (34 et 35) sont formées par les sections (38 et 39) du boîtier (22) et par les étriers (40 et 41) rattachés audit boîtier (22).

6. Éclairage selon la revendication 5, **caractérisé en ce que** les étriers (40 et 41) sont fabriqués d'un seul tenant avec le boîtier (22).

7. Éclairage selon la revendication 1, **caractérisé en ce que** les zones d'extrémité (42 et 43) libres de la sangle (25) sont rattachées aux éclisses (16 et 17) par l'intermédiaire d'éléments de déviation (44 et 45) rigides dans leur forme.

8. Éclairage selon la revendication 7, **caractérisé en ce que** les éléments de déviation (44 et 45) sont formés par des éléments d'angle (46 et 47) maintenus en place au niveau des éclisses (16 et 17).

9. Éclairage selon les revendications 1 et 2, **caractérisé en ce que** le boîtier (22) est pourvu, sur le côté orienté vers le revêtement intérieur (13), d'une bride de bordure (51) sur laquelle repose le revêtement intérieur (13).

10. Éclairage selon la revendication 1, **caractérisé en ce qu'**un bord (52) d'une ouverture traversante (53) du revêtement intérieur (13) prévu pour le corps de feu (20) est recouvert par ledit corps de feu (20).
